# EUROPEAN PATENT APPLICATION

(11) **EP 4 836 011 A1**
(43) Date of publication of application: **04.11.2026**
(21) Application number: 26174990.7
(22) Date of filing: 28.04.2026
(51) Int. Cl.: H01M 4/525, H01M 4/587, H01M 10/0569, H01M 4/02, C01B 32/20

(54) **NEGATIVE ELECTRODE FOR RECHARGEABLE BATTERY AND RECHARGEABLE BATTERY INCLUDING THE NEGATIVE ELECTRODE**

(30) Priority: 28.04.2025 KR 20250055067
(71) Applicant: SAMSUNG SDI CO., LTD., Yongin-si, Gyeonggi-do 17084 (KR)
(72) Inventor: Lee, Dong Kyu, Suwon-si, Gyeonggi-do 16678 (KR)
(74) Representative: Meissner Bolte Partnerschaft mbB

(57) **Abstract**

A negative electrode for a rechargeable battery is formed of a layer containing a network of graphite nanofibers. The layer has a specific surface area of 7 m²/g or more and a porosity of 75% to 90%.

## Description

### CROSS-REFERENCE TO RELATED APPLICATION

The present application claims priority and the benefit of Korean Patent Application No.10-2025-0055067, filed on April 28, 2025 in the Korean Intellectual Property Office, the entire disclosure of which is incorporated herein by reference.

### BACKGROUND

### 1. Field of the Disclosure

The present disclosure relates to a negative electrode for a rechargeable battery and a rechargeable battery including the negative electrode.

### 2. Discussion of Related Art

With the proliferation of electronic devices that use batteries such as, e.g., mobile phones, notebook computers, electric vehicles, and the like, the demand for secondary batteries having high energy density and high capacity has increased. Thus, there is an increasing desire to improve the performance of rechargeable lithium batteries.

A rechargeable lithium battery typically includes a positive electrode and a negative electrode that contain an active material capable of the intercalation and deintercalation of lithium ions. A rechargeable lithium battery produces electrical energy by oxidation and reduction reactions when the lithium ions are intercalated into and deintercalated from the positive electrode and the negative electrode.

### SUMMARY OF THE DISCLOSURE

The present disclosure is directed to providing a negative electrode for a rechargeable battery that provides high energy density and long cycle life without a conventional current collector.

The present disclosure is also directed to providing a rechargeable battery including the negative electrode.

A negative electrode for a rechargeable battery according to the invention is formed of a layer containing a network of graphite nanofibers, wherein the layer has a specific surface area of 7 m²/g or more and a porosity of 75% to 90%.

The invention further provides a rechargeable battery, which includes the negative electrode for a rechargeable battery; and a positive electrode.

Despite not having a conventional current collector, a negative electrode plate for a rechargeable battery according to embodiments of the present disclosure can have a thin thickness, high energy density, and long cycle life.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings.
FIG. 1 is a cross-sectional view of a negative electrode for a rechargeable battery according to an embodiment.
FIG. 2 is a cross-sectional view of an assembly of a negative electrode plate for a rechargeable lithium battery, a separator, and a positive electrode plate according to an embodiment of the present disclosure.
FIGS. 3 to 6 are cross-sectional views of rechargeable lithium batteries according to embodiments of the present disclosure.
FIG. 7 shows an SEM (scanning electron microscope) image of the surface of a negative electrode for a rechargeable battery according to an embodiment of the present disclosure.
FIG. 8 shows a TEM (transmission electron microscope) images of the crystal state of a graphite fiber in a negative electrode for a rechargeable battery according to an embodiment of the present disclosure.
FIG. 9 shows the XRD (x-ray diffraction) analysis results for Example 1.

### DETAILED DESCRIPTION OF EXEMPLARY EMBODIMENTS

Hereinafter, example embodiments of the present disclosure are described in detail. However, these are presented as examples, and the present disclosure is not limited to the expressly disclosed examples.

Unless otherwise specified herein, when a part such as a layer, a film, a region, or a plate is described as being "on" another part, this includes not only a case where the part is "directly on" the other part, but also a case where there is another part is present therebetween.

Unless particularly stated otherwise, what is expressed in the singular may also include the plural. Additionally, unless otherwise specified, "A or B" may mean "including A, including B, or including A and B."

In the specification, "combination thereof" may mean a mixture, laminate, composite, copolymer, alloy, blend, and reaction product of components.

In the specification, "particle size (D50)" refers to an average particle size indicating the size of particles with a cumulative volume of 50 vol% in the particle size distribution. Particle size distribution may be measured by a method widely known to those of ordinary skill in the art. For example, the particle size distribution may be measured using a particle size analyzer, or by transmission electron microscopy or scanning electron microscopy. As another method, by using a measuring device that uses dynamic light-scattering, particle size may be measured using dynamic light-scattering, the number of particles may be counted for each particle size range through data analysis, and the D50 value may be obtained by being calculated from the above method. Alternatively, the number of particles may be measured using a laser diffraction method. When measuring by laser diffraction, for example, particles to be measured may be dispersed in a dispersion medium, irradiated with approximately 28 kHz ultrasonic waves at an output of 60 W by introducing it into a commercially available laser diffraction particle size measuring device (e.g., Microtrac MT 3000), and D50 may be calculated based on 50% by volume of the particle size distribution using the measuring device.

If a particle is spherical, the above-referenced size may mean the diameter.

The negative electrode for a rechargeable battery according to an embodiment does not include a current collector that is included in a conventional negative electrode. Rather, the negative electrode according to the present disclosure includes a layer containing a network of graphite nanofibers, which is capable of serving as both a current collector and an active material layer.

The term "current collector" as used herein refers to a plate on which an active material layer is formed and which is formed, for example, from copper foil, nickel foil, stainless steel foil, titanium foil, nickel foam, copper foam, a polymer substrate coated with a conductive metal, and combinations thereof.

The negative electrode for a rechargeable battery according to an embodiment of the present disclosure consists of a layer containing a network of graphite nanofibers. That is, the negative electrode for a rechargeable battery may be only (consisted of) the layer containing a network of graphite nanofibers, which thereby has a thin thickness and improves the capacity of a battery.

The graphite nanofiber is a one-dimensional fiber. The above-mentioned layer has a porous structure in which the graphite nanofibers are entangled in a network-like structure. The layer is a porous structure in which graphite nanofibers are entangled in a network-like structure. The graphite nanofibers are made by graphitization of nanofibers by electrospinning or the like. Here, graphitization refers to thermal treatment of the nanofibers so that they have a (002) plane with an XRD peak at a 20 of 26°, which is characteristic of conventional graphite, and with an interplanar distance of 3.35Å as confirmed by TEM. With the present disclosure, when a layer containing graphite nanofibers is made by graphitization, the layer is capable of serving as both a current collector and an active material layer, with a specific surface area and porosity. The crystallinity of nanofibers in the layer containing graphite nanofibers may be analyzed using an XRD analyzer, with a scanning speed of 0.2°/min in a 2θ range of 10° to 90°.

The layer containing a network of graphite nanofibers has a specific surface area of 7 m²/g or more and a porosity of 75 to 90%. When the specific surface area of the layer containing a network of graphite nanofibers is less than 7 m²/g, the movement of lithium ions and electrons may be hindered, which can lower the energy density of a battery. When the porosity of the layer containing a network of graphite nanofibers is 75% to 90%, with graphite fibers as an active material, the layer has the form of three-dimensional nanofibers and thereby has high reactivity with lithium ions and high press density during electrode plate rolling in the manufacture of a battery.

In specific embodiments, the specific surface area may be (in m²/g) 7, 7.1, 7.2, 7.3, 7.4, 7.5, 7.6, 7.7, 7.8, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, or 7 to 10 m²/g. The porosity (%) may be 75, 76, 77, 78, 79, 80, 81, 82, 83, 84, 85, 86, 87, 88, 89, 90, 80 to 90, 85 to 90, or 87 to 90.

As used herein, the "specific surface area" is a BET (Brunauer, Emmett, Teller) specific surface area that can be measured by a conventional method known to those of ordinary skill in the art. The BET surface area may be measured by the degassing of the sample, adsorption/desorption of liquid nitrogen gas, and calculation of data from the adsorption and desorption graph using the BET equation.

As used herein the "porosity" refers to the area percentage of pores relative to the total area of the layer containing a network of graphite nanofibers. The porosity is preferably measured using a scanning electron microscope (SEM). The porosity may be assessed using software such as ImageJ software. Preferably, porosity is measured by the following method:
(1) the layer containing a network of graphite nanofibers is coated with Pt, and at least seven SEM images thereof are taken at the same magnification;
(2) the ratio of pore area to the total area of the layer containing a network of graphite nanofibers is determined for each SEM image;
(3) the porosity is calculated as the average of the ratio of pore area to the total area of the layer of the at least seven SEM images.

Specifically, porosity was measured by the following method:
(1) the layer containing a network of graphite nanofibers is coated with Pt, and at least seven SEM images thereof are taken at the same magnification;
(2) the SEM images are imported into the ImageJ program;
(3) after designating the area for measuring porosity, clicking 'Confirm';
(4) in the analysis tab, check area and area fraction, and then clicking 'Confirm'; and
(5) upon selecting a particular region and pressing 'Measure,' the program calculates the ratio of pore area to the total area of the layer containing a network of graphite nanofibers. Here, a black area indicates a pore.

According to an embodiment, the layer containing a network of graphite nanofibers may be felt. Here, "felt" refers to a graphite nanofiber network with an increased packing density. The felt-like layer can prevent swelling of the layer during battery operation, thereby extending the battery's cycle life. Increasing the packing density may be achieved by a method of increasing the concentration of an electrospinning solution during an electrospinning process, or a method of graphitizing and then compressing the nanofibers produced by electro spinning. But the present disclosure is not limited to these methods.

According to an embodiment, the graphite nanofibers themselves in the layer containing a network of graphite nanofibers may include carbon having a carbon-carbon covalent bond. For example, the graphite nanofibers in the layer containing a network of graphite nanofibers may be connected with neighboring graphite nanofibers by carbon-carbon bonds. The graphite nanofibers may be entangled each other to form a felt.

The graphite nanofibers may have an average diameter of 200 to 600 nm. The average diameter refers to the breadth of the graphite nanofibers. The average diameter of the nanofibers is preferably measured using a scanning electron microscope (SEM). Within this range, the graphite nanofibers can easily have the above-described specific surface area and porosity as well as flexibility, which thereby makes the graphite nanofibers able to be used in a negative electrode such as a jelly roll form. For example, the average diameter of the graphite nanofibers, in nm, may be 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, or 300 to 500. Here, the average diameter refers to the average value of the diameters of the graphite nanofibers.

The layer containing a network of graphite nanofibers may have a thickness of 10 µm or more, for example, 10, 11 ,12 ,13 ,14 ,15 ,16 , 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60 µm, or 10 to 60 µm. Within these ranges, in the layer is suitable for use in a battery.

According to an embodiment, the graphite nanofibers exhibit an interplanar distance of 3.35Å as determined using a transmission electron microscope (TEM).

In an embodiment, the layer containing a network of graphite nanofibers may include the graphite nanofibers at 99.5 wt% or more, or 99.9 wt% or more, for example, 99.9 to 100 wt%, or 100 wt%, based on 100 wt% of the layer. Within these ranges, there is no decrease in capacity of a battery and the layer can serve as both a current collector and an active material layer.

The layer containing a network of graphite nanofibers may include one or more of a binder and a conductive material at 1 wt% or less, for example, 0 to 1 wt%, or 0 to 0.1 wt%, based on 100 wt% of the layer. Here, the binder and the conductive material be a binder and a conductive material as are commonly used in a negative electrode for a rechargeable battery.

Hereinafter, a method of manufacturing a negative electrode for a rechargeable battery according to an embodiment will be described.

The negative electrode for a rechargeable battery may be manufactured by preparing an electrospinning solution containing a carbon-containing polymer, electrospinning the electrospinning solution on a substrate to form a polymer nanofiber network, and graphitizing the polymer nanofiber network and removing the substrate.

The carbon-containing polymer is not limited as long as it is enables electrospinning. The polymer may include, for example polyacrylonitrile (PAN), polyimide, or polyacrylate, but the present disclosure is not limited to these examples. Preferably, the polymer may be polyacrylonitrile.

The electrospinning solution may further include a solvent to facilitate the dispersion and dissolution of the polymer. The solvent may be dimethylformamide, dimethylacetamide, dimethyl sulfoxide, or N-methyl-2-pyrrolidone. But the present disclosure is not limited to these examples. To increase the dispersion and dissolution, stirring and/or heat treatment may be performed.

The electrospinning may be performed in a space having an internal temperature of 25 °C or more, for example, 25 °C to 60 °C. Within this range, the solvent in the electrospinning solution is highly volatile such that no residual solvent remains, thereby reducing the solvent's impact on a battery.

The electrospinning may be performed by positioning one nozzle pack including a tip with a needle size of 23G to 30G and a collector roller at a certain interval, adding the electrospinning solution to the tip, positioning a substrate on the collector roller, and applying a voltage of 35kV to 90kV to the tip. The distance between the nozzle pack and the active material layer may be 10 cm to 20 cm. When the needle size of the tip is 25G to 30G, a desired form of nanofibers can be formed that is suitable for the electro spinning.

During the electrospinning process, the electrospinning solution is spun and stretched into fibers, thereby forming a layer including nanofibers on the substrate. The electrospinning solution hangs in the form of a droplet at the tip end of the nozzle due to surface tension. When a voltage is applied to the tip, charges accumulate on the solution surface, generating a repulsive force between the charges. At the critical voltage where the repulsive force between charges exceeds the surface tension of the solution, a cone-shaped Taylor cone is formed. From its apex, a jet of the electrospinning solution is ejected and highly elongated to form nanofibers, which are collected on the substrate to form a fibrous layer.

An air pressure of the nozzle may be 1 MPa or more. Within this range, due to a high degree of solvent volatilization the effect of a residual solvent on a battery can be reduced.

It may be desirable to appropriately adjust the tip air to reduce interference between tips and ensure uniform electro spinning. The tip air may be adjusted by flowing compressed air at a pressure of 0.1 MPa to 0.3 MPa.

The roll speed of the collector roller may be adjusted to form a fibrous layer with a suitable thickness. The roll speed may be, for example, 1 m/min to 3 m/min. The flow rate of the electrospinning solution discharged from the tip may be adjusted to range from 20 µL/min to 200 µL/min. In an embodiment, a drying process may be performed at 60 °C to 120 °C after the electrospinning process.

The graphitization may be performed by thermally treating the nanofibers produced by the electrospinning at 2800 °C to 3000 °C. When the thermal treatment temperature is less than 2800 °C, it may be difficult to ensure high crystallinity. And, according to XRD analysis, the (002) plane may not appear at a 2 Θ of 26°, which makes it difficult to reach the above-described specific surface area and to achieve a high carbon purity of 99.9% or more. When the thermal treatment temperature is more than 3000 °C, the thermal treatment temperature is too high, making it difficult to reach the above porosity. In some examples, the thermal treatment temperature may be 2800 to 2900 °C.

The graphitization may include heat-treating the nanofibers produced by the electrospinning in a nitrogen atmosphere, an argon atmosphere, a hydrogen atmosphere, or a combination thereof.

The graphitization may include heat-treating the nanofibers produced by the electrospinning for 1 hour or more, for example, for 1 to 24 hours.

Before the graphitization, the nanofibers may undergo oxidation stabilization and a carbonization process.

The oxidation stabilization may remove impurities such as nitrogen from a polymer to be electrospun, for example, polyacrylonitrile, before the carbonization process. The oxidation stabilization process may include thermally treating the electrospun polymer fiber felt in an oxygen atmosphere at a temperature increase rate of 5 °C/min, up to a final temperature of 250 °C, followed by a holding time of 3 hours.

The carbonization process is for carbonizing the oxygen-stabilized nanofibers. The carbonization process may include heat-treating the nanofibers in an argon atmosphere at a temperature increase rate of 5 °C/min, up to a final temperature of 1000 °C, followed by a holding time of 3 hours.

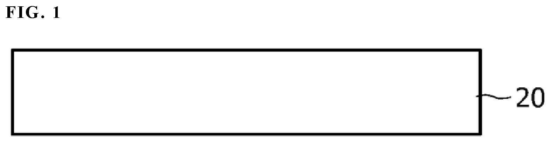

FIG. 1 is a cross-sectional view of a negative electrode for a rechargeable battery according to an embodiment of the present disclosure.

Referring to FIG. 1, the negative electrode for a rechargeable battery may be formed of a layer 20 having a network of graphite nanofibers without a current collector. Here the layer 20 includes a network of entangled graphite nanofibers.

An electrode assembly for a rechargeable battery according to one embodiment will now be described.

The electrode assembly for a rechargeable battery may include the negative electrode for a rechargeable battery. The electrode assembly may also include a positive electrode for a rechargeable battery, which is formed on the negative electrode for a rechargeable battery.

The positive electrode for the rechargeable battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0 wt% to about 5 wt%, for example 0.5 wt% to about 5 wt%, respectively, based on 100 wt% of the positive electrode active material layer.

The positive electrode active material may include a compound (lithiated intercalation compound) that is capable of intercalating and deintercalating lithium. Specifically, at least one of a composite oxide of lithium and a metal selected from among cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free lithium nickel-manganese-based oxide, or a combination thereof.

As specific examples, the following compounds represented by any one of the following Chemical Formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8). In these Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be a nickel-based positive electrode active material (e.g., a high nickel-based positive electrode active material). For example, based on 100 mol% of the metal excluding lithium in the lithium transition metal composite oxide, the positive electrode active material may have a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. The high-nickel-based positive electrode active material may be capable of providing high capacity and can be used in a high-capacity, high-density rechargeable battery.

The binder serves to attach the positive electrode active material particles to each other and also to attach the positive electrode active material to the current collector. Examples of the binder include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause an undesirable chemical change in the rechargeable battery and conducts electrons can be used in the battery. Examples of the conductive material include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Aluminum may be used as the current collector. But the present disclosure is not limited thereto.

Depending on the type of the rechargeable battery, a separator may be present between the positive electrode and the negative electrode.

### Separator

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and the inorganic material may be mixed in one coating layer. In other embodiments, a coating layer including an organic material and a coating layer including an inorganic material may be stacked.

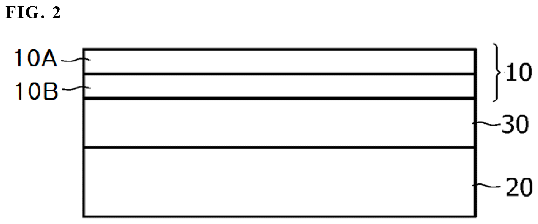

FIG. 2 is a cross-sectional view of an electrode assembly for a rechargeable battery according to an embodiment of the present disclosure. Referring to FIG. 2, the electrode assembly for a rechargeable battery may include a negative electrode 20, a positive electrode 10, and a separator 30 positioned between the negative electrode 20 and the positive electrode 10. The positive electrode 10 may include a current collector 10A and a positive electrode active material layer 10B.

The rechargeable battery includes the negative electrode for the rechargeable battery and the positive electrode for the rechargeable battery. The rechargeable battery may further include the separator and may further include an electrolyte.

### Electrolyte Solution

The electrolyte solution may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. For example, the non-aqueous organic solvent may include a mixture containing ethylene carbonate, ethyl methyl carbonate, and dimethyl carbonate in a volume ratio of 10 to 30 : 20 to 50 : 20 to 50.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables an operation of a rechargeable battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable battery may be cylindrical, prismatic, pouch, or coin-type batteries, and the like depending on its shape.

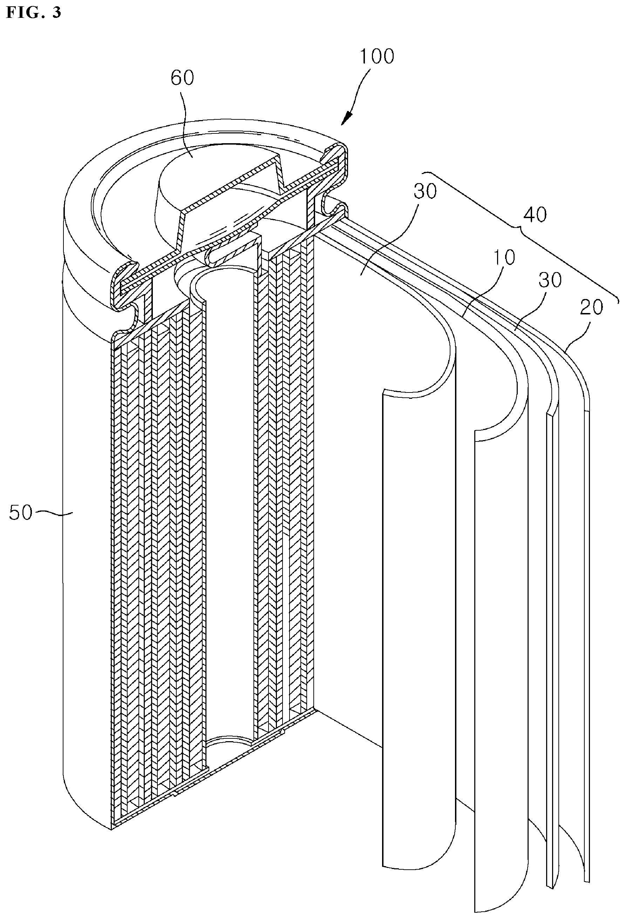

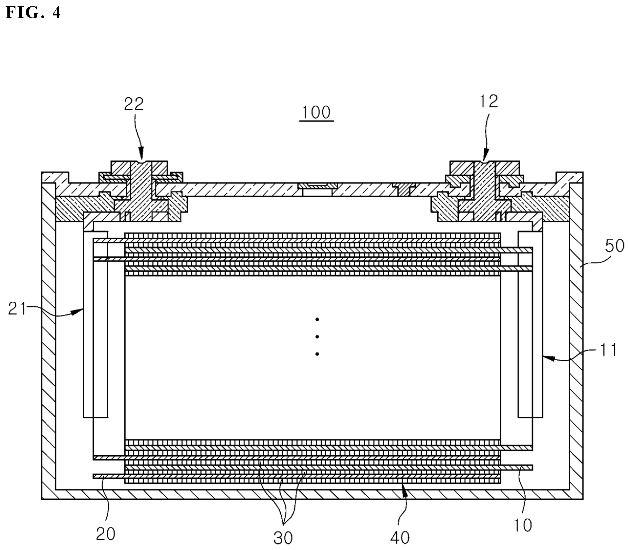

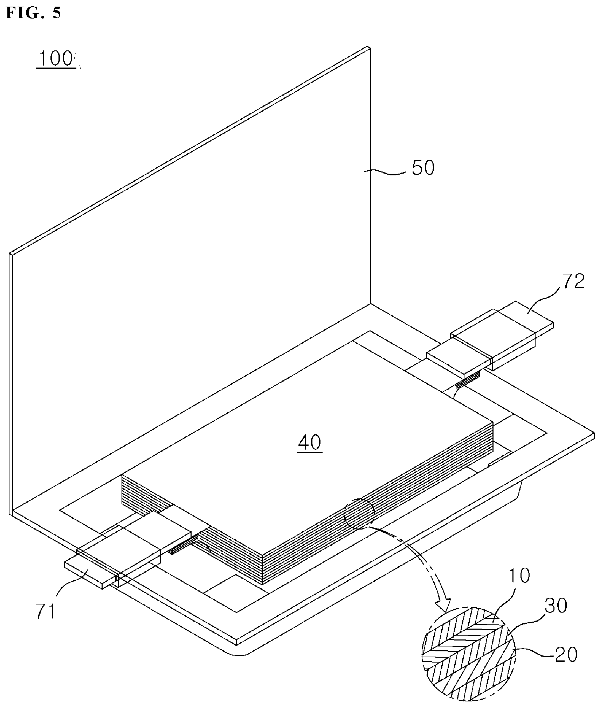

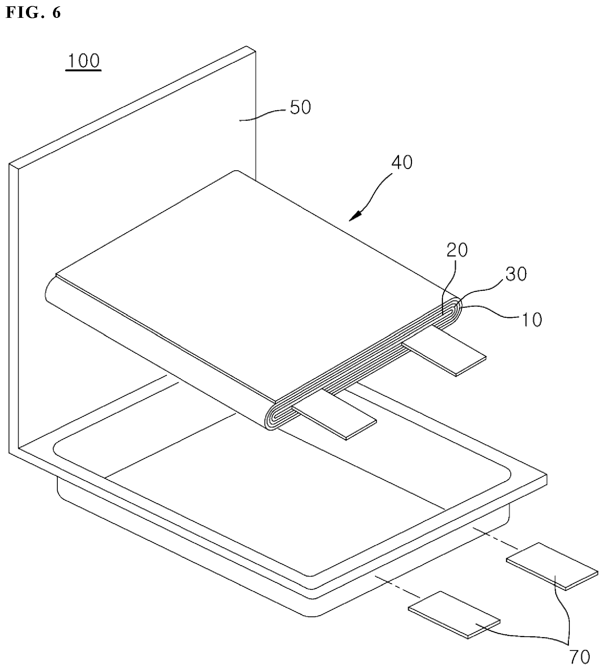

FIG. 3 to FIG. 6 are schematic views illustrating rechargeable batteries according to embodiments of the present disclosure. FIG. 3 shows a cylindrical battery, FIG. 4 shows a prismatic battery, and FIG. 5 and FIG. 6 show pouch-type batteries. Referring to FIG. 3 to FIG. 6, the rechargeable battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution. The rechargeable battery 100 may include a sealing member 60 sealing the case 50, as shown in FIG. 3. As shown in FIG. 4, the rechargeable battery 100 may include a positive lead tab 11, a positive terminal 12 connected to the positive lead tab 11, a negative lead tab 21, and a negative terminal 22 connected to the negative lead tab 21. As shown in FIG. 5 and FIG. 6, the rechargeable battery 100 may include an electrode tab 70, for example, a positive electrode tab 71 and a negative electrode tab 72 . The electrode tabs 70/71/72 form an electric path for inducing the current formed in the electrode assembly 40 to outside of the battery 100.

The rechargeable battery according to an example embodiment may be used in, for example, automobiles, mobile phones, and/or various types of electric devices.

Hereinafter, examples and comparative examples of the present invention will be described. However, the following examples are merely exemplary, and the present disclosure is not limited thereto.

### Example 1

An electrospinning solution containing 15 wt% of polyacrylonitrile was prepared by dissolving polyacrylonitrile in a dimethylacetamide solvent.

The prepared electrospinning solution was loaded into an electrospinning device and electrospun on a substrate, thereby forming a layer containing a network of polyacrylonitrile nanofibers on the substrate. The electrospinning process was performed by the following method.

One nozzle pack including 52 tips with a pore size of 25G and a collector roller were positioned 15cm apart, the electrospinning solution was added to the tip, a voltage of 40 to 50 kV was added, and then electrospinning was performed at 26 °C and a relative humidity of 50%. Here, the roll speed of the collector roller was 1 to 3 m/min, and the solid content was set to 150 µL/min in the electrospinning solution discharged from the tips. In addition, electrospinning was performed by flowing compressed air at a pressure of 0.1 MPa. After the electro spinning, drying was performed with 90 °C hot air. A layer containing a network of polyacrylonitrile nanofibers was formed to a thickness of 5 µm by the electrospinning.

The layer containing a network of polyacrylonitrile nanofibers was separated from the substrate, and the layer containing a network of polyacrylonitrile nanofibers was thermally treated in a nitrogen atmosphere at 2800 °C for 1 hour, thereby forming a layer containing a network of graphite nanofibers with an average diameter of 400 nm.

The layer containing a network of graphite nanofibers was formed in a felt-like shape.

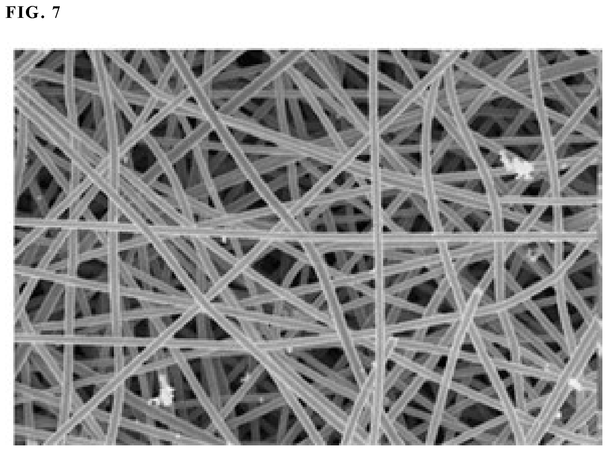

An SEM image of the surface of the layer containing a network of graphite nanofibers was taken and is shown in FIG. 7. It can be seen that the layer contains entangled graphite nanofibers and is formed in a felt-like shape.

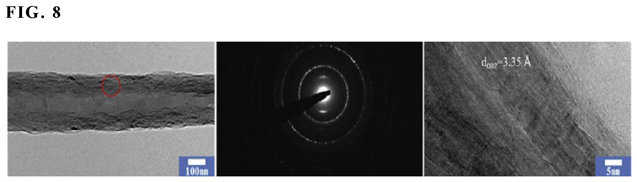

A TEM image of the layer containing a network of graphite nanofibers was taken and is shown in FIG. 8. As shown in FIG. 8, in an SAED pattern, a ring pattern was shown along with spots, indicating the presence of the (002) plane of graphite. In addition, as shown in FIG. 8, the stacked structure of the graphite planes was confirmed, and a (d002) interplanar distance of 3.35Å was verified. Thus, it can be seen that graphite nanofibers were produced by graphitization through the thermal treatment.

### Example 2

A layer containing a network of graphite nanofibers was formed in the same manner as in Example 1, except that the thermal treatment temperature in Example 1 was changed to 3000 °C.

### Comparative Example 1

A layer containing a nanofiber network was formed in the same manner as in Example 1, except that the thermal treatment temperature in Example 1 was changed to 1000 °C.

The following physical properties were evaluated for the layers having nanofibers formed in Examples and Comparative Example.

### Specific surface area (units: m²/g)

A BET specific surface area was measured using Macsorb HM Model-1208 (MOUNTECH).

### Porosity (units: %)

SEM images of the layers having graphite nanofibers were taken, and the SEM images were analyzed using Image J software.

### Elemental analysis (units: wt%)

EDS (energy dispersive x-ray spectroscopy) elemental analysis was conducted on the layer containing graphite nanofibers, and the carbon content was obtained by performing surface mapping elemental analysis on a single fiber.

### XRD crystallography

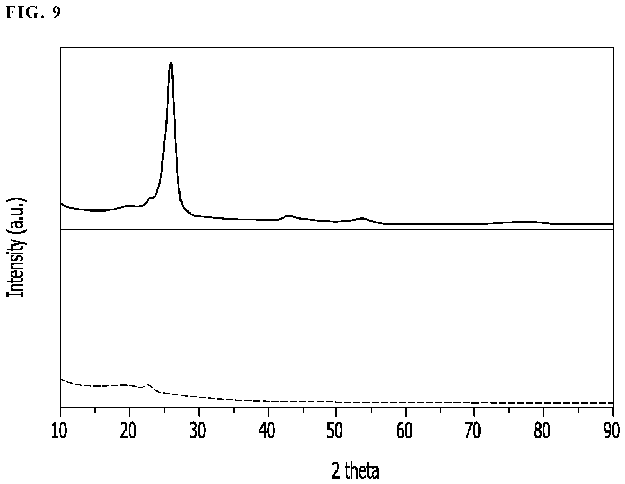

The crystallinity of nanofibers in the layer containing graphite nanofibers was analyzed using an XRD analyzer, such as a D/MAX-2500 analyzer, with a scanning speed of 0.2°/min in a 20 range of 10° to 90°. The results are shown in FIG. 9. As shown in FIG. 9, the graphite nanofibers of Example 1 showed a carbon peak.

### Charge and discharge capacities and cycle life

Half-cell rechargeable lithium batteries weremade using each of the layers having a network of graphite nanofibers formed in Examples and Comparative Example as a working electrode (negative electrode), and lithium metal as a counter electrode.

The counter electrode, the negative electrode, and a 16 µm-thick polyethylene separator were assembled to make an electrode assembly, and then an electrolyte was injected, thereby making a cylindrical rechargeable lithium battery. The electrolyte was prepared by dissolving 1.5M LiPF₆ in a non-aqueous organic solvent in which carbonate-based solvents, for example, ethylene carbonate (EC), ethyl methyl carbonate (EMC), and dimethyl carbonate (DMC) were mixed in a volume ratio of 20 : 40 : 40 (EC:EMC:DMC).

The room temperature charge-discharge characteristics of the half-cell rechargeable lithium battery were evaluated. To this end, the rechargeable lithium batteries were subjected to charge and discharge cycles under conditions of 25 °C, 0.2C charging (CC/CV, 4.2V, 0.01C Cut-off)/0.5C discharging (CC, 2.8V Cut-off). Cycle life was calculated by (200^{th} cycle discharge capacity/1^{st} cycle discharge capacity) x 100.

The results of the evaluations are shown in Table 1.

**Table 1**

| | Example 1 | Example 2 | Comparative Example 1 |
|---|---|---|---|
| Thermal treatment temperature (°C) | 2800 | 3000 | 1000 |
| Specific surface area (m²/g) | 7.1413 | 8 | 5.5137 |
| Porosity (%) | 87 | 90 | 85 |
| Carbon content in elemental analysis (wt%) | 99.7 | 99.9 | 97 |
| d002 ( Å ) | 3.35 | 3.35 | - |
| Discharge capacity after 1^{st} cycle (mAh) | 225 | 225 | 220 |
| Discharge capacity after 200^{th} cycle (mAh) | 180 | 180 | 150 |
| Life cycle (%) | 80 | 80 | 68 |

As shown in Table 1, the negative electrode for the rechargeable batteries of Examples 1 and 2 provided long cycle life. However, as also shown in Table 1, the negative electrode for a rechargeable battery of Comparative Example exhibited poor effects compared to those of Examples.

Although the preferred embodiments of the present disclosure have been described above, the present disclosure is not limited thereto, and it is possible to implement various modifications that fall within the scope of the present disclosure.

## Claims

1. A negative electrode for a rechargeable battery consisting of a layer, wherein the layer contains a network of graphite nanofibers,
wherein the layer has a specific surface area of 7 m²/g or more and a porosity of 75% to 90%.

2. The negative electrode of claim 1, wherein the porosity is 80 to 90%.

3. The negative electrode of claim 1 or 2, wherein the porosity is 85 to 90%.

4. The negative electrode of any of the preceding claims, wherein an average diameter of the graphite nanofibers is 300 to 500 nm.

5. The negative electrode of any of the preceding claims, wherein the layer containing a network of graphite nanofibers is felt.

6. The negative electrode of any of the preceding claims, wherein the layer containing a network of graphite nanofibers contains the graphite nanofibers at 99.5 wt% or more based on 100 wt% of the layer.

7. The negative electrode of any of the preceding claims, wherein the graphite nanofibers in the network are connected with neighboring graphite nanofibers by carbon-carbon bonds.

8. The negative electrode of any of the preceding claims, wherein the negative electrode for a rechargeable battery does not include a current collector.

9. The negative electrode of any of the preceding claims, wherein the layer containing a network of graphite nanofibers includes one or more of a binder and a conductive material at 1 wt% or less based on 100 wt% of the layer.

10. The negative electrode of any of the preceding claims, wherein the graphite nanofibers have a (002) plane with an XRD peak at a 20 of 26° in XRD analysis.

11. The negative electrode of any of the preceding claims, wherein the graphite nanofibers have a (002) interplanar distance of 3.35Å.

12. A rechargeable battery comprising:
the negative electrode for a rechargeable battery of any of the preceding claims; and
a positive electrode.

13. The rechargeable battery of claim 12, wherein the positive electrode includes a nickel-based active material having a nickel content of 80 mol% or more with respect to 100 mol% of metals except lithium in the nickel-based active material.

14. The rechargeable battery of claim 12 or 13, further comprising an electrolyte that includes a non-aqueous organic solvent, the non-aqueous organic solvent includes a mixture containing ethylene carbonate, ethyl methyl carbonate, and dimethyl carbonate in a volume ratio of 10 to 30 (ethylene carbonate) : 20 to 50 (ethyl methyl carbonate) : 20 to 50 (dimethyl carbonate).
